# EUROPÄISCHE PATENTSCHRIFT

(11) **EP 1 572 830 B1**
(45) Veröffentlichungstag und Bekanntmachung des Hinweises auf die Patenterteilung: **02.03.2011**
(21) Anmeldenummer: 03785723.2
(22) Anmeldetag: 03.12.2003
(51) Int. Cl.: C09K 5/20, C09K 5/10, H01M 8/04

(54) **KÜHLMITTEL AUF BASIS VON 1,3-PROPANDIOL ENTHALTEND AZOLDERIVATE FÜR BRENNSTOFFZELLEN-KÜHLSYSTEME**
COOLANT BASED ON AZOLE DERIVATIVES CONTAINING 1,3-PROPANEDIOL FOR FUEL CELL COOLING SYSTEMS
AGENTS REFRIGERANTS A BASE DE 1,3-PROPANDIOL CONTENANT DES DERIVES D'AZOLE POUR DES SYSTEMES DE REFROIDISSEMENT DE PILES A COMBUSTIBLES

(30) Priorität: 12.12.2002 DE 10258385
(43) Veröffentlichungstag der Anmeldung: 14.09.2005
(73) Patentinhaber: BASF SE, 67056 Ludwigshafen (DE)
(72) Erfinder: WENDEROTH, Bernd, 69488 Birkenau (DE); FLAIG, Birgit, 67259 Beindersheim (DE)
(86) Internationale Anmeldenummer: PCT/EP2003/013633
(87) Internationale Veröffentlichungsnummer: WO 2004/053015

(56) Entgegenhaltungen:
- WO-A-02/055630
- WO-A-02/055759
- WO-A-02/073727
- DE-A- 10 128 530

## Beschreibung

Die vorliegende Erfindung betrifft Kühlmittel für Kühlsysteme in Brennstoffzellenantrieben, insbesondere für Kraftfahrzeuge, auf Basis von 1,3-Propandiol oder Mischungen von 1,3-Propandiol mit Alkylenglykolen und/oder deren Derivaten, welche spezielle Azolderivate als Korrosionsinhibitoren enthalten.

Brennstoffzellen für den mobilen Einsatz in Kraftfahrzeugen müssen auch bei niedrigen Außentemperaturen von bis zu etwa -40°C betrieben werden können. Ein frostgeschützter Kühlmittelkreislauf ist deshalb unerlässlich.

Die Verwendung von bei Verbrennungsmotoren eingesetzten herkömmlichen Kühlerschutzmitteln wäre bei Brennstoffzellen ohne eine vollständige elektrische Isolierung der Kühlkanäle nicht möglich, da diese Mittel wegen der darin als Korrosionsinhibitoren enthaltenen Salze und ionisierbaren Verbindungen eine zu hohe elektrische Leitfähigkeit haben, was die Funktion der Brennstoffzelle negativ beeinträchtigen würde.

Die DE-A 198 02 490 (1) beschreibt Brennstoffzellen mit einem frostgeschützten Kühlkreislauf, bei dem als Kühlmittel eine paraffinische Isomerenmischung mit einem Pour Point von kleiner als -40°C verwendet wird. Nachteilig ist jedoch die Brennbarkeit eines solchen Kühlmittels.

Aus der EP-A 1 009 050 (2) ist ein Brennstoffzellensystem für Automobile bekannt, bei dem als Kühlmedium Luft verwendet wird. Nachteilig ist dabei allerdings, daß Luft bekanntlich ein schlechterer Wärmeleiter als ein flüssiges Kühlmedium ist.

Die WO 00117951 (3) beschreibt ein Kühlsystem für Brennstoffzellen, bei dem als Kühlmittel ein reines Monoethylenglykol/Wasser-Gemisch im Verhältnis 1:1 ohne Additive eingesetzt wird. Da wegen fehlender Korrosionsinhibitoren keinerlei Korrosionsschutz gegenüber den im Kühlsystem vorhandenen Metallen vorhanden wäre, enthält der Kühlkreislauf eine Ionenaustauscher-Einheit, um die Reinheit des Kühlmittels zu erhalten und um längere Zeit eine niedrige spezifische Leitfähigkeit zu gewährleisten, wodurch Kurzschlüsse und Korrosion verhindert werden. Als geeignete Ionenaustauscher werden anionische Harze wie zum Beispiel vom stark alkalischen Hydroxyl-Typ und kationische Harze wie zum Beispiel auf Sulfonsäuregruppen-Basis sowie andere Filtrationseinheiten wie zum Beispiel Aktivkohlefilter genannt.

Der Aufbau und die Funktionsweise einer Brennstoffzelle für Automobile, insbesondere einer Brennstoffzelle mit elektronenleitender Elektrolytmembran ("PEM-Btennstoffzelle", "polymer electrolyte membrane fuel cell") ist in (3) exemplarisch beschrieben, wobei als bevorzugte Metallkomponente im Kühlkreislauf (Kühler) Aluminium bevorzugt wird.

Die WO 02/055630 (4) beschreibt Kühlmittel für Kühlsysteme in Brennstoffzellenantrieben auf Glykol-Basis, die ortho-Kieselsäureester als Korrosionsinhibitoren enthalten.

Die WO 021073727 (5) beschreibt nicht-toxische Brennstoffzellenkühlmittel auf Basis von 1,3-Propandiol in Wasser ohne Additive.

Der Einsatz von Azolderivaten wie Benzimidazol, Benzotriazol oder Tolutriazol als Korrosionsinhibitoren in Kühlerschutzmitteln für herkömmliche, mit Otto- oder Dieselkraftstoff betriebene Verbrennungsmotoren ist seit langem bekannt, beispielsweise aus: G. Reinhard et al., "Aktiver Korrosionsschutz in wässrigen Medien", S. 87-98, expert-Verlag 1995 (ISBN 3-8169-1265-6).

Die Verwendung von derartigen Azolderivaten in Kühlmitteln auf Basis von Alkylenglykolen oder deren Derivaten für Kühlsysteme in Brennstoffzellenantrieben ist in der deutschen Patentanmeldung Az. 101 28 530.2 (6) beschrieben.

Aus der WO 02/055759 sind Kühlmittel auf Basis von 1,3-Propandiol bekannt, welche Azolderivate als Korrosionsinhibitoren enthalten können. Für Brennstoffzellenantriebe wird hierin auch reines 1,3-Propandiol ohne einen Gehalt an Korrosionsinhibitoren als Kühlmittel empfohlen.

Ein **Hauptproblem** bei Kühlsystemen in Brennstoffzellenantrieben ist die Aufrechterhaltung einer niedrigen elektrischen Leitfähigkeit des Kühlmittels, um eine sichere und störungsfreie Funktion der Brennstoffzelle zu gewährleisten und dauerhaft Kurzschlüsse und Korrosion zu verhindern.

Überraschenderweise wurde nun gefunden, daß sich die Zeitdauer für eine niedrige elektrische Leitfähigkeit in einem Kühlsystem auf Basis 1,3-Propandiol oder Mischungen von 1,3-Propandiol mit Alkylenglykolen und/oder deren Derivaten, auch und insbesondere wenn es gemäß (3) einen integrierten Ionenaustauscher enthält, durch die Zugabe geringer Mengen von Azolderivaten deutlich verlängern lässt. Dies bietet für die Praxis den Vorteil, daß sich die Zeitintervalle zwischen zwei Kühlmittelwechseln bei Brennstoffzellenantrieben weiter ausdehnen lassen, was insbesondere im Automobilsektor von Interesse ist.

Demgemäss wurden Gefrierschutzmittelkonzentrate für Kühlsysteme in Brennstoffzellenantrieben gefunden, aus welchen durch Verdünnen mit ionenfreiem Wasser gebrauchsfertige wässrige Kühlmittelzusammensetzungen mit einer Leitfähigkeit von maximal 50 µS/cm, die im wesentlichen aus
(a) 10 bis 90 Gew-% 1,3-Propandiol oder Mischungen von 1,3-Propandiol mit Alkylenglykolen und/oder deren Derivaten,
(b) 90 bis 10 Gew.-% Wasser,
(c) 0,005 bis 5 Gew.-% einer oder mehrerer fünfgliedriger heterocyclischer Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, und
(d) gegebenenfalls ortho-Kieselsäureestern bestehen,
resultieren.

Bevorzugt werden hierbei Gefrierschutzmittelkonzentrate, welche insgesamt 0,05 bis 5 Gew.-%, insbesondere 0,075 bis 2,5 Gew.-%, vor allem 0,1 bis 1 Gew.-% der genannten Azolderivate enthalten.

Diese fünfgliedrigen heterocyclischen Verbindungen (Azolderivate) enthalten als Heteroatome üblicherweise zwei N-Atome und kein S-Atom, 3 N-Atome und kein S-Atom oder ein N-Atom und ein S-Atom.

Bevorzugte Gruppen der genannten Azolderivate sind anellierte Imidazole und anellierte 1,2,3-Triazole der allgemeinen Formel (I) oder (II), 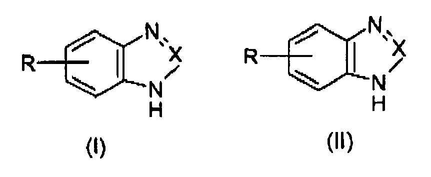 in denen die Variable R Wasserstoff oder einen C₁- bis C₁₀-Alkylrest, insbesondere Methyl oder Ethyl, bedeutet und die Variable X ein Stickstoffatom oder die Gruppierung C-H bezeichnet. Typische Beispiele für Azolderivate der allgemeinen Formel (I) sind Benzimidazol (X = C-H, R = H), Benzotriazol (X = N, R = H) und Tolutriazol (Tolyltriazol) (X = N, R = CH₃). Ein typisches Beispiel für ein Azolderivat der allgemeinen Formel (II) ist hydriertes 1,2,3-Tolutriazol (Tolyltriazol) (X = N, R = CH₃).

Eine weitere bevorzugte Gruppe der genannten Azolderivate sind Benzthiazole der allgemeinen Formel (III) 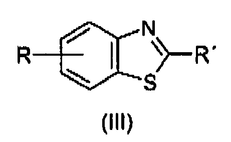 in der die Variable R die oben genannte Bedeutung hat und die Variable R' Wasserstoff, einen C₁- bis C₁₀-Alkylrest, insbesondere Methyl oder Ethyl, oder insbesondere die Mercaptogruppe (-SH) bezeichnet. Ein typisches Beispiel für ein Azolderivat der allgemeinen Formel (III) ist 2-Mercaptobenzthiazol.

Weiterhin werden nicht-anellierte Azolderivate der allgemeinen Formel (IV) 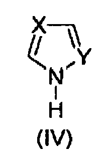 in der die Variablen X und Y zusammen zwei Stickstoffatome oder ein Stickstoffatom und eine Gruppierung C-H bezeichnen, beispielsweise 1H-1,2,4-Triazol (X = Y = N) oder Im idazol (X = N, Y = C-H) bevorzugt.

Ganz besonders bevorzugt werden für die vorliegende Erfindung als Azolderivate Benzimidazol, Benzotriazol, Tolutriazol, hydriertes Tolutriazol, 1H-1,2,4-Triazol oder Mischungen hieraus.

Die genannten Azolderivate sind kommerziell verfügbar oder nach gängigen Methoden herstellbar. Hydrierte Benzotriazole wie hydriertes Tolutriazol sind ebenfalls gemäß DE-A 19 48 794 (7) zugänglich und auch kommerziell verfügbar.

Neben den genannten Azolderivaten enthalten die erfindungsgemäßen Gefrierschutzmittelkonzentrate vorzugsweise zusätzlich ortho-Kieselsäureester, wie sie in (4) beschrieben werden. Typische Beispiele für derartige ortho-Kieselsäureester sind Tetraalkoxysilane wie Tetraethoxysilan. Bevorzugt werden hierbei Gefrierschutzmittelkonzentrate, insbesondere solche mit einem Gehalt an insgesamt 0,05 bis 5 Gew.-% der genannten Azolderivate, aus welchen gebrauchsfertige wässrige Kühlmittelzusammensetzungen mit einem Siliziumgehalt von 2 bis 2000 Gew.-ppm Silizium, insbesondere 25 bis 500 Gew.-ppm Silizium, resultieren.

Aus den erfindungsgemäßen Gefrierschutzmittelkonzentraten lassen sich durch Verdünnen mit ionenfreiem Wasser gebrauchsfertige wässrige Kühlmittelzusammensetzungen mit einer Leitfähigkeit von maximal 50 µS/cm, die im wesentlichen aus
(a) 10 bis 90 Gew.-% 1,3-Propandiol oder Mischungen von 1,3-Propandiol mit Alkylenglykolen und/oder deren Derivaten,
(b) 90 bis 10 Gew.-% Wasser,
(c) 0,005 bis 5 Gew.-%, insbesondere 0,0075 bis 2,5 Gew.-%, vor allem 0,01 bis 1 Gew.-%, der genannten Azolderivaten, und
(d) gegebenenfalls ortho-Kieselsäureestern
bestehen, herstellen. Die Summe aller Komponenten beträgt hierbei 100 Gew.-%.

Gegenstand der vorliegenden Erfindung sind somit auch gebrauchsfertige wässrige Kühlmittelzusammensetzungen für Kühlsysteme in Brennstoffzellenantrieben, die im wesentlichen aus
(a) 10 bis 90 Gew.-% 1,3-Propandiol oder Mischungen von 1,3-Propandiol mit Alkylenglykolen und/oder deren Derivaten,
(b) 90 bis 10 Gew.-% Wasser,
(c) 0,005 bis 5 Gew.-%, insbesondere 0,0075 bis 2,5 Gew.-%, vor allem 0,01 bis 1 Gew.-%, der genannten Azolderivaten, und
(d) gegebenenfalls ortho-Kieselsäureestern
bestehen und die durch Verdünnen der genannten Gefrierschutzmittelkonzentraten mit ionenfreiem Wasser erhältlich sind. Die Summe aller Komponenten beträgt hierbei 100 Gew.-%.

Die erfindungsgemäßen gebrauchsfertigen wässrigen Kühlmittelzusammensetzungen weisen eine anfängliche elektrische Leitfähigkeit von maximal 50 µS/cm, insbesondere 25 µS/cm, vorzugsweise 10 µS/cm, vor allem 5 µS/cm oder weniger, auf. Die Leitfähigkeit wird im Dauerbetrieb des Brennstoffzellenantriebes über mehrere Wochen oder Monate auf diesem niedrigen Niveau gehalten, insbesondere wenn im Brennstoffzellenantrieb ein Kühlsystem mit integriertem Ionenaustauscher verwendet wird.

Der pH-Wert der erfindungsgemäßen gebrauchsfertigen wässrigen Kühlmittelzusammensetzungen fällt über die Betriebsdauer deutlich langsamer ab als bei nicht mit den genannten Azolderivaten additivierten Kühlflüssigkeiten. Der pH-Wert liegt üblicherweise im Bereich von 4,5 bis 7 bei frischen erfindungsgemäßen Kühlmittelzusammensetzungen und fällt im Dauerbetrieb meist bis auf 3,5 ab. Das zum Verdünnen verwendete ionenfreie Wasser kann reines destilliertes oder bidestilliertes Wasser oder beispielsweise durch Ionenaustausch entionisiertes Wasser sein.

Das bevorzugte Gew.-Mischungsverhältnis von 1,3-Propandiol oder Mischungen von 1,3-Propandiol mit Alkylenglykolen und/oder deren Derivaten zu Wasser in den gebrauchsfertigen wässrigen Kühlmittelzusammensetzungen beträgt 20:80 bis 80:20, insbesondere 25:75 bis 75:25, vorzugsweise 65:35 bis 35:65, vor allem 60:40 bis 40:60.

Es können auch Mischungen von 1,3-Propandiol mit Alkylenglykol-Komponenten und/oder Derivaten hiervon verwendet werden, insbesondere mit Monoethylenglykol, daneben aber auch mit Monopropylenglykol (= 1,2-Propandiol), Polyglykolen, Glykolethern oder Glycerin. Bevorzugt werden hierbei solche Mischungen mit einem Gehalt an 1,3-Propandiol von mehr als 50 Gew.-%, insbesondere von mehr als 80 Gew.-%, vor allem von mehr als 95 Gew.-%.

Die erfindungsgemäßen Gefrierschutzmittelkonzentrate selbst, aus denen die beschriebenen gebrauchsfertigen wässrigen Kühlmittelzusammensetzungen resultieren, lassen sich durch Auflösen der genannten Azolderivate in 1,3-propandiol oder Mischungen von 1,3-Propandiol mit Alkylenglykolen und/oder deren Derivaten, die wasserfrei oder mit einem geringen Gehalt an Wasser (etwa bis zu 10 Gew.-%, insbesondere bis zu 5 Gew.-%) eingesetzt werden können, herstellen.

Die erfindungsgemäßen Kühlmittelzusammensetzungen können auch in Brennstoffzellenaggregaten gemäß WO 02/063707 (8) oder gemäß der deutschen Patentanmeldung ,Az. 102 01 276.8 (9) eingesetzt werden, in denen das Kühlmedium zur Verhinderung von Korrosion zusätzlich elektrochemisch oder mit einem flüssigen Entionisierungsmittel entionisiert wird.

### Beispiele

Die Erfindung wird in den folgenden Beispielen erläutert, ohne sie jedoch darauf zu beschränken. Die erfindungsgemäßen Kühlmittel-zusammensetzungen wurden in dem nachfolgend beschriebenen Test bezüglich ihrer Eignung für Kühlsysteme von Brennstoffzellenantrieben geprüft:

### Versuchsbeschreibung:

Fünf Aluminium-Prüfmetalle (vakuumgelötetes Al, Bezeichnung: EN-AW 3005, einseitig lotplattiert mit 10 Gew.-% EN-AW 4045; Abmessungen: 58x26x0,35 mm mit einer Bohrung von 7 mm Durchmesser) wurden gewogen, mittels einer Kunstoffschraube mit Mutter und Teflonscheiben nichtleitend verbunden und auf zwei Teflonständern in ein 1 l Becherglas mit Schliff und Glasdeckel gestellt. Anschließend wurden 1000 ml Testflüssigkeit eingefüllt. Das Becherglas wurde mit dem Glasdeckel luftdicht verschlossen, auf 88°C aufgeheizt, und die Flüssigkeit wurde mit einem Magnetrührer kräftig gerührt. Die elektrische Leitfähigkeit wurde bei Testbeginn sowie in wöchentlichen Abständen an einer zuvor entnommenen Flüssigkeitsprobe bei Raumtemperatur gemessen (Leitfähigkeitsmessgerät LF 530 der Firma WTW/Weilheim). Nach dem Beenden der Tests wurden die Aluminiumproben visuell beurteilt und nach dem Beizen mit wässriger Chromsäure/Phosphorsäure gemäß ASTM D 1384-94 gravimetrisch ausgewertet.

Die Ergebnisse sind der Tabelle 1 zu entnehmen. Sie zeigen, daß auch nach einer Versuchsdauer von 28 Tagen bei den erfindungsgemäßen Beispielen 1 und 2 im Rahmen der Schwankungsbreite seit Versuchsbeginn praktisch kein Anstieg der elektrischen Leitfähigkeit beobachtet werden konnte; die Werte lagen immer noch unter 5 µS/cm und waren damit den Fomulierungen gemäß (6) mindestens ebenbürtig.

Bei den Versuchen trat keine bzw. keine nennenswerte Korrosion an den geprüften AluminiumProben auf

## Patentansprüche

1. Gefrierschutzmittelkonzentrate für Kühlsysteme in Brennstoffzellenantrieben, aus welchen durch Verdünnen mit ionenfreiem Wasser gebrauchsfertige wässrige Kühlmittelzusammensetzungen mit einer Leitfähigkeit von maximal 50 µS/cm, die im wesentlichen aus
(a) 10 bis 90 Gew.-% 1,3-Propandiol oder Mischungen von 1,3-Propandiol mit Alkylenglykolen und/oder deren Derivaten,
(b) 90 bis 10 Gew.-% Wasser,
(c) 0,005 bis 5 Gew.-% einer oder mehrerer fünfgliedriger heterocyclischer Verbindungen (Azolderivate) mit 2 oder 3 Heteroatomen aus der Gruppe Stickstoff und Schwefel, welche kein oder maximal ein Schwefelatom enthalten und welche einen aromatischen oder gesättigten sechsgliedrigen Anellanten tragen können, und
(d) gegebenenfalls ortho-Kieselsäureestern bestehen,
resultieren.

2. Gefrierschutzmittelkonzentrate für Kühlsysteme in Brennstoffzellenantrieben nach Anspruch 1, enthaltend insgesamt 0,05 bis 5 Gew.-% der Azolderivate.

3. Gefrierschutzmittelkonzentrate für Kühlsysteme in Brennstoffzellenantrieben nach Anspruch 1 oder 2, enthaltend als Azolderivate Benzimidazol, Benzotriazol, Tolutriazol, 1H-1,2,4-Triazol und/oder hydriertes Tolutriazol.

4. Gefrierschutzmittelkonzentrate für Kühlsysteme in Brennstoffzellenantrieben nach den Ansprüchen 1 bis 3, enthaltend neben den Azolderivaten zusätzlich ortho-Kieselsäureester, aus welchen gebrauchsfertige wässrige Kühlmittelzusammensetzungen mit einem Siliziumgehalt von 2 bis 2000 Gew.-ppm resultieren.

5. Gebrauchsfertige wässrige Kühlmittelzusammensetzungen für Kühlsysteme in Brennstoffzellenantrieben, die im wesentlichen aus
(a) 10 bis 90 Gew.-% 1,3-Propandiol oder Mischungen von 1,3-Propandiol mit Alkylenglykolen und/oder deren Derivaten,
(b) 90 bis 10 Gew.-% Wasser,
(c) 0,005 bis 5 Gew.-% der Azolderivate und
(d) gegebenenfalls ortho-Kieselsäureestern bestehen,
erhältlich durch Verdünnen von Gefrierschutzmittelkonzentraten gemäß den Ansprüchen 1 bis 4 mit ionenfreiem Wasser.

## Claims

1. An antifreeze concentrate for cooling systems in fuel cell drives, from which ready-to-use aqueous coolant compositions having a conductivity of not more than 50 µS/cm, which consist essentially of
(a) from 10 to 90% by weight of 1,3-propanediol or mixtures of 1,3-propanediol with alkylene glycols and/or derivates thereof,
(b) from 90 to 10% by weight of water,
(c) from 0.005 to 5% by weight of one or more five-membered heterocyclic compounds (azole derivatives) having 2 or 3 hetero atoms from the group consisting of nitrogen and sulfur, which comprise no sulfur atom or not more than one sulfur atom and which may carry an aromatic or saturated six-membered fused moiety and
(d) optionally orthosilicic esters,
result by dilution with ion-free water.

2. The antifreeze concentrate for cooling systems in fuel cell drives according to claim 1, comprising altogether from 0.05 to 5% by weight of the azole derivatives.

3. The antifreeze concentrate for cooling systems in fuel cell drives according to claim 1 or 2, comprising, as azole derivatives, benzimidazole, benzotriazole, tolutriazole, 1H-1,2,4-triazole and/or hydrogenated tolutriazole.

4. The antifreeze concentrate for cooling systems in fuel cell drives according to any of claims 1 to 3, comprising, in addition to the azole derivatives, orthosilicic esters, from which ready-to-use aqueous coolant compositions having a silicon content of from 2 to 2000 ppm by weight result.

5. A ready-to-use aqueous coolant composition for cooling systems in fuel cell drives, which consists essentially of
(a) from 10 to 90% by weight of 1,3-propanediol or mixtures of 1,3-propanediol with alkylene glycols and/or derivatives thereof,
(b) from 90 to 10% by weight of water,
(c) from 0.005 to 5% by weight of the azole derivatives and
(d) optionally orthos silicic esters,
obtainable by dilution of the antifreeze concentrate according to any of claims 1 to 4 with ion-free water.

## Revendications

1. Concentrés d'agent antigel pour systèmes de refroidissement dans des moteurs à pile à combustible, à partir desquels des compositions aqueuses d'agent réfrigérant prêtes à l'emploi ayant une conductivité d'au plus 50 µS/cm, qui sont essentiellement constituées par
(a) 10 à 90 % en poids de 1,3-propanediol ou de mélanges de 1,3-propanediol avec des alkylène-glycols et/ou leurs dérivés,
(b) 90 à 10 % en poids d'eau,
(c) 0,005 à 5 % en poids d'un ou de plusieurs composés hétérocycliques à cinq éléments (dérivés d'azole) contenant 2 ou 3 hétéroatomes du groupe constitué par l'azote et le soufre, qui ne contiennent pas d'atome de soufre, ou au plus un atome de soufre, et qui peuvent porter un annelant aromatique ou saturé à six éléments, et
(d) éventuellement des esters de l'acide ortho-silicique,
sont obtenues par dilution avec de l'eau exempte d'ions.

2. Concentrés d'agent antigel pour systèmes de refroidissement dans des moteurs à pile à combustible selon la revendication 1, contenant au total 0,05 à 5 % en poids des dérivés d'azole.

3. Concentrés d'agent antigel pour systèmes de refroidissement dans des moteurs à pile à combustible selon la revendication 1 ou 2, contenant en tant que dérivés d'azole du benzimidazole, du benzotriazole, du tolutriazole, du 1H-1,2,4-triazole et/ou du tolutriazole hydrogéné.

4. Concentrés d'agent antigel pour systèmes de refroidissement dans des moteurs à pile à combustible selon les revendications 1 à 3, contenant en plus des dérivés d'azole également des esters de l'acide ortho-silicique, à partir desquels des compositions aqueuses d'agent réfrigérant prêtes à l'emploi ayant une teneur en silicium de 2 à 2 000 ppm en poids sont obtenues.

5. Compositions aqueuses d'agent réfrigérant prêtes à l'emploi pour systèmes de refroidissement dans des moteurs à pile à combustible, qui sont essentiellement constituées par
(a) 10 à 90 % en poids de 1,3-propanediol ou de mélanges de 1,3-propanediol avec des alkylène-glycols et/ou leurs dérivés,
(b) 90 à 10 % en poids d'eau,
(c) 0,005 à 5 % en poids des dérivés d'azole et
(d) éventuellement des esters de l'acide ortho-silicique,
pouvant être obtenues par dilution de concentrés d'agent antigel selon les revendications 1 à 4 avec de l'eau exempte d'ions.
